# EUROPÄISCHE PATENTSCHRIFT

(11) **EP 3 038 944 B1**
(45) Veröffentlichungstag und Bekanntmachung des Hinweises auf die Patenterteilung: **18.11.2020**
(21) Anmeldenummer: 14732084.0
(22) Anmeldetag: 12.06.2014
(51) Int. Cl.: F01C 1/077, G09F 3/03, G06K 19/077, B65D 63/10

(54) **VORRICHTUNG ZUR DATENÜBERTRAGUNG UNTER EINSATZ EINES TRANSPONDERS**
APPARATUS FOR DATA TRANSMISSION USING A TRANSPONDER
DISPOSITIF DE TRANSFERT DE DONNÉES EN UTILISANT UN TRANSPONDEUR

(30) Priorität: 30.08.2013 DE 102013014451
(43) Veröffentlichungstag der Anmeldung: 06.07.2016
(73) Patentinhaber: Carl Stahl Hebetechnik GmbH, 73079 Süßen (DE)
(72) Erfinder: RUBE, Helmut, 73079 Süssen (DE)
(74) Vertreter: Bartels und Partner, Patentanwälte
(86) Internationale Anmeldenummer: PCT/EP2014/001601
(87) Internationale Veröffentlichungsnummer: WO 2015/028107

(56) Entgegenhaltungen:
- WO-A1-2009/158037
- WO-A1-2013/105366
- GB-A- 2 477 927
- JP-A- 2008 009 537

## Beschreibung

Die Erfindung betrifft eine Vorrichtung zur Datenübertragung unter Einsatz eines Transponders, mit den Merkmalen im Oberbegriff von Anspruch 1. Die Erfindung betrifft ferner ein Verfahren zur Herstellung einer solchen Vorrichtung.

Vorrichtungen zur Datenübertragung mittels Transpondern sind Stand der Technik. Sie ermöglichen eine eindeutige Identifizierung beispielsweise von produzierten Gütern sowohl hinsichtlich des Herstellers und/oder der Gebrauchseigenschaften und/oder der Bestandsteile von Gütern oder von beliebigen Komponenten. Derartige Methoden zur Datenübertragung können vorteilhaft auch zur elektronischen Kennzeichnung von Tieren, seien es Nutztiere oder Haustiere, eingesetzt werden. Ebenso finden derartige Vorrichtungen verbreitete Anwendung als Sicherheitseinrichtung, um beispielsweise lediglich berechtigten Personen einen Zugang zu abgesicherten Bereichen zu ermöglichen. Als Stand der Technik ist für einen derartigen Einsatzzweck im Dokument GB 2 477 927 A eine Vorrichtung der eingangs genannten Art offenbart, um mittels eines Befestigungsbandes einen Transponder am Handgelenk einer Person anzubringen. Bei der bekannten Vorrichtung ist als Befestigungsband eine Art sog. Kabelbinder vorgesehen, also ein Kunststoffband, das als Rastteil eine Art Verrippung aufweist, die mit einer Rasteinrichtung im Durchgriffsschlitz eines Kopfteils des Befestigungsbandes zusammenwirkt, wenn dieses in einer Schlaufe um das Handgelenk der betreffenden Person herumgeführt ist. Als Transponder kann ein passiver RFID-Transponder vorgesehen sein.

Die WO 2009/158037 A1 beschreibt eine Vorrichtung zur Datenübertragung unter Einsatz eines Transponders, der an gewünschten Komponenten mittels eines Befestigungsbandes festlegbar ist, das ein gehäuseartiges Kopfteil aufweist, mit dem Abschnitte des Bandes unter Bildung einer Schlaufe zwecks Umfassen von Komponenten beliebiger Art verbindbar sind, wobei das Kopfteil hierfür einen Durchgriffsschlitz aufweist, der mit einer Rasteinrichtung versehen ist, die mit einem zuordenbaren Rastteil des Befestigungsbandes zusammenwirkt, wenn das freie Ende des Bandes den Schlitz durchgreift, wobei der Transponder ohne weitere Anbau- oder Zusatzteile und ohne Überstand unmittelbar in das Gehäuse des Kopfteiles eingegossen und damit integriert ist.

Ausgehend von diesem Stand der Technik stellt sich die Erfindung die Aufgabe, eine Vorrichtung der eingangs genannten Gattung zur Verfügung zu stellen, die sich gegenüber dem genannten Stand der Technik durch eine Bauweise auszeichnet, die besonders einfach ist und einen universellen Einsatz der Vorrichtung ermöglicht. Eine weitere Aufgabe besteht darin, ein Verfahren zur Herstellung der Vorrichtung aufzuzeigen.

Erfindungsgemäß ist diese Aufgabe durch eine Vorrichtung gelöst, die die Merkmale des Patentanspruchs 1 in seiner Gesamtheit aufweist. Eine Verwendung einer Vorrichtung wird durch den Anspruch 10 aufgezeigt. Ein Verfahren zur Herstellung der Vorrichtung wird durch den Anspruch 11 aufgezeigt. Vorteilhafte Ausführungsformen sind Gegenstände der Unteransprüche.

Gemäß dem kennzeichnenden Teil des Anspruchs 1 besteht eine wesentliche Besonderheit der Erfindung darin, dass die Ausnehmung in der Art eines Aufnahmezylinders oder in der Art eines Aufnahmekonus ausgebildet ist und dass nach Einbringen des Transponders in die Ausnehmung diese nach außen hin mittels eines Stopfens verschlossen ist.

Es ist ferner vorgesehen, dass der Transponder ohne weitere Anbau- oder Zusatzteile und ohne Überstand unmittelbar in das Gehäuse des Kopfteils integriert ist. Anders als bei der erwähnten, bekannten Vorrichtung, bei der für den Transponder ein zylinderförmiges Transpondergehäuse vorgesehen ist, das am freien Ende des Kopfteils des Befestigungsbandes angeordnet ist und sich zu beiden Seiten der Ebene des Bandes über das Kopfteil hinaus erstreckt, ist bei der erfindungsgemäßen Vorrichtung bei in das Kopfteil integriertem Transponder an keiner Seite des Kopfteils ein Überstand vorhanden. Bei dem bei der bekannten Vorrichtung vorgesehenen Transpondergehäuse, das am freien Ende des Kopfteils angebracht ist und über das Kopfteil an zwei Seiten übersteht, besteht die Gefahr des Abreißens bei rauen Betriebsbedingungen, so dass die Einsatzmöglichkeiten entsprechend eingeschränkt sind, beispielsweise auf die Anbringung am Handgelenk einer Person. Bei der erfindungsgemäß vorgesehenen Integration des Transponders in das Kopfteil ist der Transponder bestmöglich geschützt, so dass die erfindungsgemäße Vorrichtung vielfältiger einsetzbar ist. Insbesondere eröffnet sich die vorteilhafte Möglichkeit der Verwendung bei Hebezeugen und -geschirren, Kran- und Fördereinrichtungen, Anschlagmitteln, Zuggurten, Lastketten, Lastseilen und dergleichen. Durch die erfindungsgemäß vorgesehene Anbringung mittels eines in der Art eines Kabelbinders ausgebildeten Befestigungsbandes sind die Probleme vermieden, die bislang die Verwendung von Transpondern bei den vorstehend genannten Einsatzzwecken behindert haben. Wie in dem den diesbezüglichen Stand der Technik zeigenden Dokument DE 20 2011 000 794 U1 ausgeführt ist, werden bislang Transponder zur Anbringung in ein metallisches Lastaufnahmeteil eingeschlagen. Bei der Härte der in Frage kommenden Lastaufnahmeteile gestaltet sich dieser Vorgang äußerst schwierig. Um ein sicheres Auslesen der Daten zu gewährleisten, muss außerdem darauf geachtet werden, dass der eingeschlagene Transponder möglichst bündig mit der elektrisch leitenden Metalloberfläche ist. Demgemäß ermöglicht die Erfindung eine problemlose Anbringung des Transponders für derartige Anwendungszwecke.

In vorteilhafter Weise kann das Befestigungsband einstückiger Bestandteil des Kopfteils sein, wobei eine Ausnehmung im Kopfteil für die Aufnahme des Transponders zwischen dem dem freien Bandende gegenüberliegenden Ende des Befestigungsbandes und dem Durchtrittsschlitz im Gehäuse des Kopfteils angeordnet ist. Die Vorrichtung ist dergestalt einfach und rationell herstellbar, insbesondere aus einem Kunststoffmaterial, wie es für die bekannten Kabelbinder benutzbar ist.

Mit Vorteil kann die Anordnung so getroffen sein, dass die Unterseite des Befestigungsbandes in einer Ebene mit der Unterseite des Kopfteilgehäuses liegt, wobei ausgehend von dieser Unterseite die Ausnehmung für den Transponder in das Gehäuse des Kopfteils eingebracht ist.

Bei vorteilhaften Ausführungsbeispielen schließt der Stopfen bündig mit der Unterseite des Kopfteilgehäuses ab.

Das Kopfteilgehäuse kann als über die Oberseite des Befestigungsbandes hinausstehender Block ausgebildet sein, dessen beide seitlichen Begrenzungswände, die in Verlängerung zu den beiden Seitenwänden des Befestigungsbandes liegen, sich in Richtung dieses Bandes konisch verjüngen. Das Kopfteilgehäuse schließt sich bei dieser Formgebung in sanftem Übergang ohne scharfen Absatz an die Seitenränder des Befestigungsbandes an.

Vorzugsweise liegt die Längsachse der Ausnehmung senkrecht auf der gemeinsamen Mittellängsachse von Befestigungsband und Kopfteil. Die Ausnehmung befindet sich dadurch im bestens geschützten Zentralbereich des Kopfteils.

Wie auch bei den sog. Kabelbindern können auf der Unterseite des Befestigungsbandes in vorzugsweise äquidistanten Abständen voneinander die Rastteile als vorstehende Rastrippen ausgebildet sein, die quer zur Längsachse des Bandes verlaufen.

Das Befestigungsband kann unter Bildung der Schlaufe mit seinen Rastteilen derart in den Durchgriffsschlitz des Kopfteilgehäuses mit dessen Rasteinrichtung eingreifen, dass die Ausnehmung mit dem Transponder von der Schlaufe umfasst ist. Bei an einer betreffenden Komponente angebrachter Vorrichtung befindet sich dadurch die Ausnehmung mit dem Transponder innenliegend und ist gegen von außen her wirksame mechanische Belastungen geschützt.

Entsprechend der in Frage kommenden Technik kann der Transponder Bestandteil eines passiven RFID-Systems sein.

Gegenstand der Erfindung ist gemäß Patentanspruch 10 auch die Verwendung einer Vorrichtung nach einem der Ansprüche 1 bis 9 zur Datenübertragung von Komponenten, wie beispielsweise:
- Seilhebezüge und -geschirre,
- Kran- und Fördereinrichtungen,
- Anschlagmittel,
- Zurrgurte und
- Lastketten und Lastseile.

Gemäß den Patentansprüchen 11 und 12 ist Gegenstand der Erfindung ferner ein Verfahren zur Herstellung einer erfindungsgemäßen Vorrichtung gemäß einem der Ansprüche 1 bis 9.

Nachstehend ist die Erfindung anhand eines in der Zeichnung dargestellten Ausführungsbeispiels im Einzelnen erläutert. Es zeigen:
- Fig. 1: eine gegenüber einer praktischen Ausführungsform etwa dreifach vergrößert, explosionsartig auseinandergezogen sowie abgebrochen gezeichnete, perspektivische Schrägansicht eines Ausführungsbeispiels der erfindungsgemäßen Vorrichtung;
- Fig. 2 und 3: eine Draufsicht bzw. Seitenansicht des Ausführungsbeispiels; und
- Fig. 4: eine Seitenansicht, in der das Ausführungsbeispiel im Zustand einer gebildeten Schlaufe dargestellt ist.

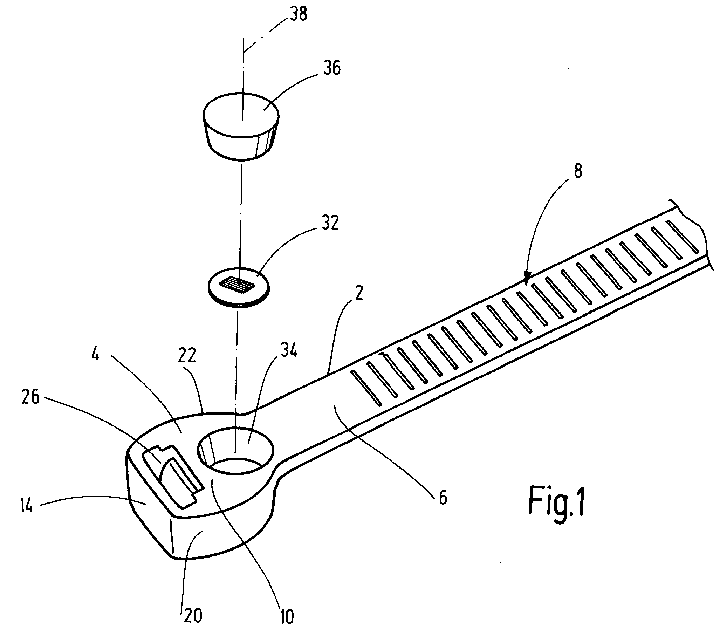

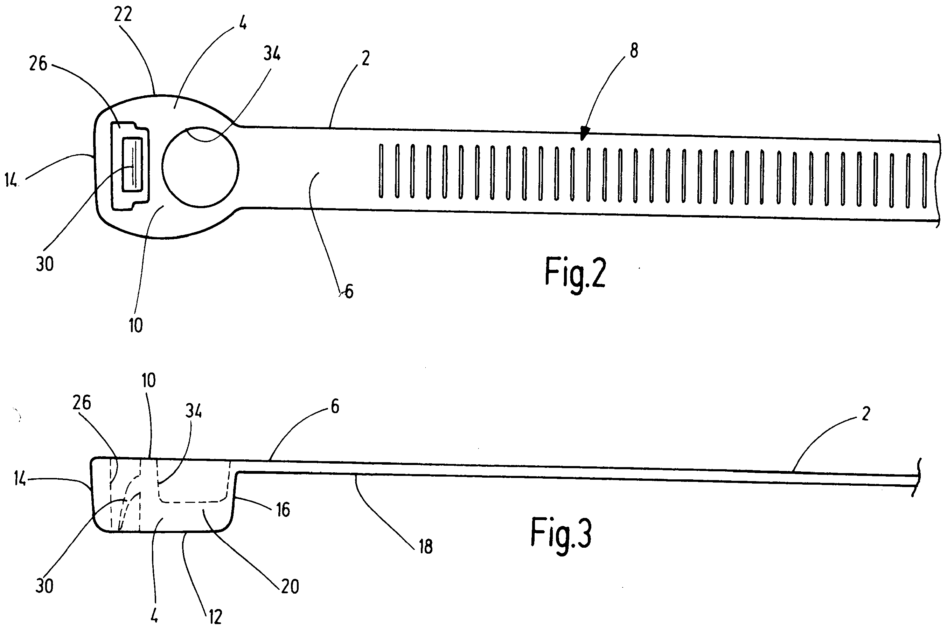

Bei dem in der Zeichnung dargestellten Ausführungsbeispiel weist die erfindungsgemäße Vorrichtung in der Art eines sog. Kabelbinders ein Befestigungsband 2 aus einem Kunststoffmaterial, wie Polyamid, auf, das zusammen mit einem an einem Ende vorgesehenen Kopfteil 4 durch Spritzformen hergestellt ist. Bei einem praktischen Ausführungsbeispiel hat das flexible Befestigungsband 2 bei einer Stärke von etwa 1,2 mm eine Breite von 5 mm und in gestrecktem Zustand, der in Fig. 1 bis 3 gezeigt ist, einschließlich des Kopfteils 4 eine Länge von 130 mm. Wie auch bei den üblichen Kabelbindern bildet das Befestigungsband 2 an der in Fig. 1 und 2 sichtbaren Unterseite 6 ein Rastteil in Form einer sich über einen Großteil der Länge der Unterseite 6 erstreckenden Verrippung mit im Abstand voneinander senkrecht zur Längsrichtung verlaufenden Rastrippen 8. Die axiale Länge des Kopfteils 4 beträgt beim gezeigten Ausführungsbeispiel 9 mm.

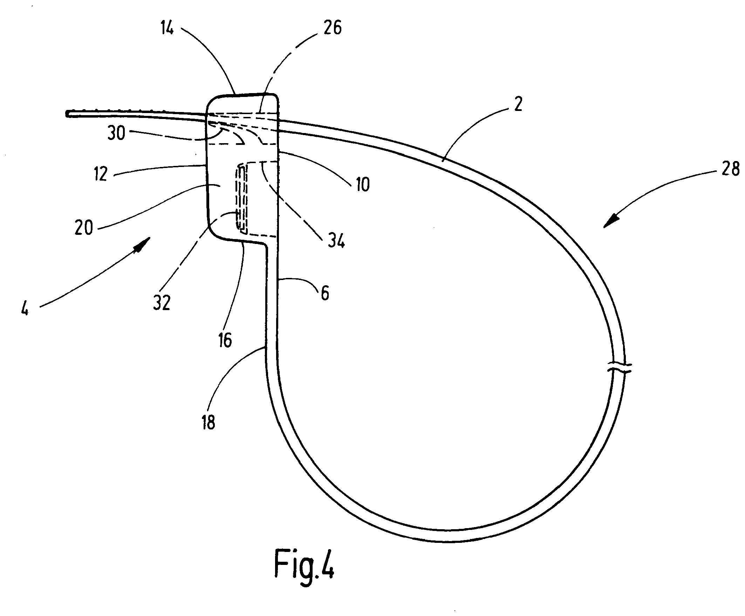

Das mit dem Band 2 einstückig geformte Kopfteil 4 hat die Form eines Gehäuses mit ebener Bodenfläche 10, die die Ebene der Unterseite 6 des Bandes 2 fortsetzt. Die Gehäuseoberseite 12, die in Fig. 3 untenliegend und in Fig. 4 linksseitig sichtbar ist, erstreckt sich im Wesentlichen eben parallel zur Bodenfläche 10. Am äußeren Ende verbindet eine ebenflächige Stirnseite 14 die Bodenseite 10 mit der Oberseite 12, zu denen sie rechtwinklig verläuft. Der Stirnseite 14 gegenüberliegend erstreckt sich eine Endfläche 16 (s. Fig. 3 und 4) mit etwa senkrechtem Verlauf zur Oberseite 18 des Bandes 2 hin. Zwischen dieser Endfläche 16 und der Stirnseite 14 weist das Kopfteil 4 Seitenwände 20 und 22 auf, die, wie am deutlichsten aus Fig. 2 zu ersehen ist, einen gewölbten Verlauf besitzen, dergestalt, dass von der Stirnseite 14 ausgehend sich die Breite des Kopfteils 4 bis zu einem mittigen Bereich größter Kopfbreite vergrößert und dass die Seitenwände 20, 22 vom Bereich in der größten Breite ausgehend einen die Breite des Kopfteils 4 bis zu den Seitenrändern des Bandes 2 hin verjüngenden Verlauf besitzen. In diesem Bereich der größten Breite des Kopfteils 4 beträgt diese bei einem praktischen Beispiel 8,5 mm, und die Höhe des über die Oberseite 18 des Bandes 2 hinausstehenden Kopfteiles 4 beträgt etwa 4 mm.

Das Kopfteil 4 weist in der Nähe der Stirnseite 14 einen sich senkrecht zwischen Bodenseite 10 und Oberseite 12 durchgehend erstreckenden Durchgriffsschlitz 26 auf, der vom freien Ende des Bandes 2 her durchgreifbar ist, um eine Bandschlaufe zu bilden, wie sie in Fig. 4 sichtbar und mit 28 bezeichnet ist. Im Durchgriffsschlitz 26 ist, wie bei Kabelbindern üblich, als Rasteinrichtung eine flexible Rastzunge 30 vorgesehen, die mit den Rastrippen 8 des eingesteckten Bandes 2 zusammenwirkt und das Zurückziehen des in den Schlitz 26 eingesteckten Bandes 2 verhindert.

Im Kopfteil 4 ist zwischen dem Durchgriffsschlitz 26 und der Endfläche 16, mit der das Kopfteil 4 an das Band 2 angrenzt, für die Aufnahme eines Transponders 32 eine Ausnehmung eingebracht, die die Form einer von der Bodenseite 10 ausgehenden Sackbohrung 34 besitzt, die nach innen hin leicht konisch verläuft. Die Längsachse 38 der Ausnehmung 34 steht senkrecht auf der gemeinsamen Mittenlängsachse von Band 2 und Kopfteil 4. Der Transponder 32 in Form eines runden Blättchens mit einem Durchmesser von etwa 3 mm ist in die Bohrung 34 mit angepasstem Durchmesser einlegbar. Nach Einlegen ist die Bohrung 34 mittels eines passenden Stopfens 36 aus Kunststoff verschließbar, der beispielsweise aus dem gleichen Kunststoff wie das Band 2 besteht. Der Stopfen 36 kann in der Bohrung 34 durch Verschweißen, Einpressen und/oder Verkleben gesichert sein. Bei eingesetztem Stopfen 36 schließt dieser die Bohrung 34 bündig mit der Bodenseite 10 des Kopfteils 4 und mit der Ebene der Unterseite 6 des Bandes 2.

Die Fig. 4 zeigt den Zustand der gebildeten Schlaufe 28, mit der die Vorrichtung durch Umfassen eines (nicht gezeigten) Bauteils an einer betreffenden Komponente anbringbar ist. Wie gezeigt, befindet sich bei der gebildeten Schlaufe 28 der Eingang der den Transponder 32 aufnehmenden Bohrung 34 innenliegend, so dass der Transponder 32 auch unter rauen Einsatzbedingungen gegen mechanische Einwirkungen von außen her bestmöglich geschützt ist.

Die konische Form der Bohrung nebst zugeordnetem Stopfen hat auch den Vorteil der Selbsthemmung bei der Montage, die dadurch erleichtert ist. Insoweit ist auch keine zusätzliche Verriegelung notwendig. Um eine vollständige Dichtheit zu erreichen, kann der Stopfen zusätzlich noch verschweißt oder verklebt werden. Die eingesetzten Kunststoffmaterialien sind UV-beständig; bestehen beispielsweise aus ETFE.

Ein besonderer Vorteil der integrierten Bauweise ist auch, dass ohne zusätzliche, insbesondere überstehende Bauteile, die erfinderische Lösung eine geringere Angriffsfläche bietet und damit die Gefahr eines Abreißens von Bauteilen oder ein unbeabsichtigtes Einhaken oder Hängenbleiben vermieden ist.

## Patentansprüche

1. Vorrichtung zur Datenübertragung unter Einsatz eines Transponders (32), der an gewünschten Komponenten mittels eines Befestigungsbandes (2) festlegbar ist, das ein gehäuseartiges Kopfteil (4) aufweist, mit dem Abschnitte des Bandes (2) unter Bildung einer Schlaufe (28) zwecks Umfassen von Komponenten beliebiger Art verbindbar sind, wobei das Kopfteil (4) hierfür einen Durchgriffsschlitz (26) aufweist, der mit einer Rasteinrichtung (30) versehen ist, die mit einem zuordenbaren Rastteil (8) des Befestigungsbandes (2) zusammenwirkt, wenn das freie Ende des Bandes (2) den Schlitz (26) durchgreift, wobei der Transponder (32) ohne weitere Anbau- oder Zusatzteile und ohne Überstand unmittelbar im Gehäuse des Kopfteiles (4) integriert ist, **dadurch gekennzeichnet, dass** eine Ausnehmung (34) in der Art eines Aufnahmezylinders oder in der Art eines Aufnahmekonus ausgebildet ist und dass nach Einbringen des Transponders (32) in die Ausnehmung (34) diese nach außen hin mittels eines Stopfens (36) verschlossen ist.

2. Vorrichtung nach Anspruch 1, **dadurch gekennzeichnet, dass** das Befestigungsband (2) einstückiges Bestandteil des Kopfteiles (4) ist und dass eine Ausnehmung (34) im Kopfteil (4) für die Aufnahme des Transponders (32) zwischen dem dem freien Bandende gegenüberliegenden Ende des Befestigungsbandes (2) und dem Durchgriffsschlitz (26) im Gehäuse des Kopfteils (4) angeordnet ist.

3. Vorrichtung nach Anspruch 1 oder 2, **dadurch gekennzeichnet, dass** die Unterseite (6) des Befestigungsbandes (2) in einer Ebene mit der Bodenseite (10) des Kopfteilgehäuses (4) liegt und dass ausgehend von dieser Bodenseite (10) die Ausnehmung (34) für den Transponder (32) in das Gehäuse des Kopfteiles (4) eingebracht ist.

4. Vorrichtung nach einem der vorstehenden Ansprüche, **dadurch gekennzeichnet, dass** der Stopfen (36) bündig mit der Bodenseite (10) des Kopfteilgehäuses (4) abschließt.

5. Vorrichtung nach einem der vorstehenden Ansprüche, **dadurch gekennzeichnet, dass** das Kopfteilgehäuse (4) als über die Oberseite (18) des Befestigungsbandes (2) hinausstehender Block ausgebildet ist, dessen beide seitlichen Begrenzungswände (20, 22), die in Verlängerung zu den beiden Seitenrändern des Befestigungsbandes (2) liegen, sich in Richtung dieses Bandes (2) verjüngen.

6. Vorrichtung nach einem der vorstehenden Ansprüche, **dadurch gekennzeichnet, dass** die Längsachse (38) der Ausnehmung (34) senkrecht auf der gemeinsamen Mittenlängsachse von Befestigungsband (2) und Kopfteil (4) liegt.

7. Vorrichtung nach einem der vorstehenden Ansprüche, **dadurch gekennzeichnet, dass** auf der Unterseite (6) des Befestigungsbandes (2) in vorzugsweise äquidistanten Abständen voneinander die Rastteile als vorstehende Rastrippen (8) ausgebildet sind, die quer zur Längsachse des Bandes (2) verlaufen.

8. Vorrichtung nach einem der vorstehenden Ansprüche, **dadurch gekennzeichnet, dass** unter Bildung der Schlaufen (28) das Befestigungsband (2) mit seinen Rastteilen (8) derart in den Durchgriffsschlitz (26) des Kopfteilgehäuses (4) mit dessen Rasteinrichtung (30) eingreift, dass die Ausnehmung (34) mit dem Transponder (32) von der Schlaufe (28) umfasst ist.

9. Vorrichtung nach einem der vorstehenden Ansprüche, **dadurch gekennzeichnet, dass** der Transponder (32) Bestandteil eines passiven RFID-Systems ist.

10. Verwendung einer Vorrichtung zur Datenübertragung nach einem der vorstehenden Ansprüche, **dadurch gekennzeichnet, dass** das Befestigungsband (2) mit seiner Festlegeschlaufe (28) im Betrieb Komponenten der Seil-, Hebe- und Transporttechnik umfasst, wie beispielsweise:
- Seilhebezüge und -geschirre,
- Kran- und Fördereinrichtungen,
- Anschlagmittel,
- Zurrgurte und
- Lastketten und Lastseile.

11. Verfahren zum Herstellen einer Vorrichtung zur Datenübertragung nach einem der Ansprüche 1 bis 9, **dadurch gekennzeichnet, dass** das Befestigungsband (2) und das Kopfteil (4) mit seiner Ausnehmung (34) einstückig aus Kunststoff mittels eines Spritzgießverfahrens hergestellt wird, dann der Transponder (32) in die Ausnehmung (34) eingelegt und die Ausnehmung (34) anschließend nach außen hin bündig mit der Bodenseite (10) des Kopfteils (4) abschließend mit einem Stopfen (36) verschlossen wird.

12. Verfahren nach Anspruch 11, **dadurch gekennzeichnet, dass** nach Einlegen des Stopfens (36) in die Ausnehmung (34) dieser mit dem sonstigen Kunststoffmaterial des Kopfteilgehäuses (4) verschweißt wird.

## Claims

1. Apparatus for data transmission using a transponder (32) that can be fixed to the required components by means of a fixing band (2), said band comprising a housing-like top part (4) to which portions of the band (2) can be connected, forming a loop (28) for the purpose of enclosing components of any shape, the top part (4) comprising a through slot (26) for this purpose, said slot being furnished with a latching device (30), which interacts with an assignable latching part (8) of the fixing band (2) when the free end of the band (2) passes through the slot (26), the transponder (32) being directly integrated in the housing of the top part (4) without any further fixtures or additional parts and without any overhang, **characterised in that** a recess (34) is designed in the form of a receiving cylinder or in the form of a receiving cone and **in that**, once the transponder (32) is placed in the recess (34), said recess is sealed from the outside by means of a plug (36).

2. Apparatus according to claim 1, **characterised in that** the fixing band (2) forms an integral part of the top part (4) and **in that** a recess (34) is arranged in the top part (4) to receive the transponder (32) between the end of the fixing band (2) opposite the free end of the band and the through slot (26) in the housing of the top part (4).

3. Apparatus according to either claim 1 or claim 2, **characterised in that** the underside (6) of the fixing band (2) lies in a plane with the bottom side (10) of the top part housing (4) and **in that** the recess (34) for the transponder (32) is placed in the housing of the top part (4) from said bottom side (10).

4. Apparatus according to any one of the preceding claims, **characterised in that** the plug (36) ends flush with the bottom side (10) of the top part housing (4).

5. Apparatus according to any one of the preceding claims, **characterised in that** the top part housing (4) is designed as a block protruding over the upper side (18) of the fixing band (2), both lateral boundary walls (20, 22) of said block, which form an extension to the two side edges of the fixing band (2), tapering in the direction of said band (2).

6. Apparatus according to any one of the preceding claims, **characterised in that** the longitudinal axis (38) of the recess (34) lies perpendicular to the common central longitudinal axis of the fixing band (2) and the top part (4).

7. Apparatus according to any one of the preceding claims, **characterised in that** the latching parts are designed as protruding latching ribs (8) on the underside (6) of the fixing band (2) at preferably equidistant intervals from one another, said latching ribs running transversely with respect to the longitudinal axis of the band (2).

8. Apparatus according to any one of the preceding claims, **characterised in that** the fixing band (2) with its engaging parts (8) engages in the through slot (26) of the top part housing (4) with its engaging device (30), forming the loops (28), in such a way that the recess (34) with the transponder (32) is enclosed by the loop (28).

9. Apparatus according to any one of the preceding claims, **characterised in that** the transponder (32) is part of a passive RFID system.

10. Use of an apparatus for data transmission according to any one of the preceding claims, **characterised in that** the fixing band (2) with its fixing loop (28) encloses components from the fields of cable, lifting and transport technology during operation, such as, for example:
- cable hoists and harnesses,
- crane and conveyor devices,
- lifting tackle,
- lashing straps and
- load chains and load cables.

11. Method for manufacturing an apparatus for data transmission according to any one of claims 1 to 9, **characterised in that** the fixing band (2) and the top part (4) with its recess (34) are manufactured in one piece from plastics material by means of an injection moulding method, after which the transponder (32) is inserted in the recess (34) and the recess (34) is then finally sealed from the outside flush with the bottom side (10) of the top part (4) by means of a plug (36).

12. Method according to claim 11, **characterised in that**, after inserting the plug (36) in the recess (34), said plug is welded using the other plastics material of the top part housing (4).

## Revendications

1. Dispositif de transmission de données, en utilisant un transpondeur (32), qui peut être fixé à des éléments souhaités au moyen d'une bande (2) de fixation, qui a une partie (4) de tête de type en boîtier, par laquelle des tronçons de la bande (2) peuvent, en formant une boucle (28), être reliés en vue d'enserrer des éléments de n'importe quel type, la partie (4) de tête ayant pour cela une fente (26) de pénétration ou étant pourvue d'un dispositif (30) d'encliquetage, qui coopère avec une partie (8) d'encliquetage pouvant être conjuguée de la bande (2) de fixation, lorsque l'extrémité libre de la bande (2) passe dans la fente (26), le transpondeur (32) étant, sans autre partie rapportée ou supplémentaire et sans porte-à-faux, intégré directement au boîtier de la partie (4) de tête, **caractérisé en ce qu'**un creux (34) est prévu à la manière d'un cylindre de réception ou à la manière d'un cône de réception et **en ce que**, après avoir mis le transpondeur (32) dans le creux (34), celui-ci est fermé vers l'extérieur au moyen d'un bouchon (36).

2. Dispositif suivant la revendication 1, **caractérisé en ce que** la bande (2) de fixation est une partie constitutive d'une seule pièce de la partie (4) de tête et **en ce qu'**un creux (34), dans la partie (4) de tête, est prévu pour la réception du transpondeur (32) entre l'extrémité, opposée à l'extrémité libre de la bande, de la bande (2) de fixation et la fente (26) de pénétration dans le boîtier de la partie (4) de tête.

3. Dispositif suivant la revendication 1 ou 2, **caractérisé en ce que** la face (6) inférieure de la bande (2) de fixation est dans un plan ayant le côté (10) de fond du boîtier (4) de la partie de tête et **en ce que**, à partir de ce côté (10) de fond, le creux (34) pour le transpondeur (32) est ménagé dans le boîtier de la partie (4) de tête.

4. Dispositif suivant l'une des revendications précédentes, **caractérisé en ce que** le bouchon (36) ferme à affleurement avec le côté (10) de fond du boîtier (4) de la partie de tête.

5. Dispositif suivant l'une des revendications précédentes, **caractérisé en ce que** le boîtier (4) de la partie de tête est constitué d'un bloc en saillie de la face (18) supérieure de la bande (2) de fixation, bloc dont les deux parois (20, 22) latérales de démarcation, qui se trouvent dans le prolongement des deux bords latéraux de la bande (2) de fixation, se réduisent en direction de cette bande (2).

6. Dispositif suivant l'une des revendications précédentes, **caractérisé en ce que** l'axe (38) longitudinal du creux (34) est perpendiculaire à l'axe longitudinal médian commun de la bande (2) de fixation et de la partie (4) de tête.

7. Dispositif suivant l'une des revendications précédentes, **caractérisé en ce que**, sur la face (6) inférieure de la bande (2) de fixation, de préférence d'une manière équidistante les unes des autres, sont constituées les parties d'encliquetage sous forme de nervures (8) d'encliquetage en saillie, qui s'étendent transversalement à l'axe longitudinal de la bande (2).

8. Dispositif suivant l'une des revendications précédentes, **caractérisé en ce que**, en formant la boucle (28), la bande (2) de fixation pénètre, par ses parties (8) d'encliquetage, dans la fente (26) de pénétration du boîtier (4) de la partie de tête par son dispositif (30) d'encliquetage, de manière à ce que le creux (34) ayant le transpondeur (32) soit entouré de la boucle (28).

9. Dispositif suivant l'une des revendications précédentes, **caractérisé en ce que** le transpondeur (32) est une partie constitutive d'un système RFID passif.

10. Utilisation d'un dispositif de transmission de données suivant l'une des revendications précédentes, **caractérisée en ce que** la bande (2) de fixation, avec sa boucle (28) de fixation, comprend, en fonctionnement, des éléments de la technique de câble, de levage et de transport, comme par exemple :
- câbles et agrès de levage,
- dispositifs de grue et de convoyage,
- moyens de butée,
- sangles d'amarrage et
- chaînes de charge et parties de charge.

11. Procédé de fabrication d'un dispositif de transmission de données suivant l'une des revendications 1 à 9, **caractérisé en ce que** l'on fabrique la bande (2) de fixation et la partie (4) de tête avec son creux (34) d'une seule pièce en matière plastique au moyen d'un procédé de moulage par injection, on insère ensuite le transpondeur (32) dans le creux (34) et on ferme ensuite le creux (34) par un bouchon (36), en fermant à affleurement vers l'extérieur avec le côté (10) de fond de la partie (4) de tête.

12. Procédé suivant la revendication 11, **caractérisé en ce que**, après l'insertion du bouchon (36) dans le creux (34), on le soude avec le reste de la matière plastique du boîtier (4) de la partie de tête.
